# EUROPÄISCHE PATENTANMELDUNG

(11) **EP 2 000 726 A2**
(43) Veröffentlichungstag der Anmeldung: **10.12.2008**
(21) Anmeldenummer: 08010098.5
(22) Anmeldetag: 03.06.2008
(51) Int. Cl.: F16L 21/02, E02D 29/12

(54) **Schacht aus Beton**

(30) Priorität: 06.06.2007 DE 102007026846; 15.06.2007 DE 102007028324
(71) Anmelder: Hans Rinninger u. Sohn GmbH & Co., 88353 Kisslegg (DE)
(72) Erfinder: Rinninger, Jörg, 88299 Leutkirch (DE)
(74) Vertreter: Otten, Herbert

(57) **Zusammenfassung**

Die Erfindung betrifft einen Schacht (3) aus Beton oder dgl., wobei der Schacht (3) wenigstens einen ersten Schachtring (2) und einen zweiten Schachtring (4) umfasst, wobei die Schachtringe (2, 4) jeweils einen oberen und einen unteren Rand (26 - 29) aufweisen, wobei wenigstens der erste Schachtring (2) an seinem mit dem zweiten Schachtring (4) zusammenwirkenden unteren Rand (27) mehrere an dem Rand (27) in Abstand voneinander am Umfang verteilt angeordnete streifenförmige Lastaufnahmeelemente (1) aus Kunststoff aufweist, wobei das einzelne Lastaufnahmeelement (1) mit einem Fußteil in den Rand (27) eingebettet ist und mit einem Kopfteil über eine Stirnfläche (F27) des Randes (27) vorsteht, wobei das Fußteil an einer Fußfläche wenigstens einen Steg (8) aufweist, wobei im zusammengebauten Zustand des Schachtes (3) der zweite Schachtring (4) mit seinem oberen Rand (28) an dem Kopfteil des Lastaufnahmeelements (1) anliegt und einen Abstand (D3) zu dem unteren Rand (27) des ersten Schachtrings (2) aufweist, in welchem das Lastaufnahmeelement (8) befestigt ist.

## Beschreibung

Die Erfindung betrifft einen Schacht aus Beton gemäß dem Oberbegriff des Anspruchs 1 sowie ein Lastaufnahmeelement gemäß dem Oberbegriff des Anspruchs 2.

Aus der EP 1 104 825 B1 ist ein Schacht aus Beton oder dgl. bekannt, wobei der Schacht wenigstens einen ersten Schachtring und einen zweiten Schachtring umfasst, wobei die Schachtringe jeweils einen oberen und einen unteren Rand aufweisen, wobei wenigstens der erste Schachtring an seinem mit dem zweiten Schachtring zusammenwirkenden unteren Rand mehrere an dem Rand in Abstand voneinander am Umfang verteilt angeordnete, streifenförmige Lastaufnahmeelemente aus Kunststoff aufweist, wobei das einzelne Lastaufnahmeelement mit einem Fußteil in dem Rand eingebettet ist und mit einem Kopfteil über eine Stirnfläche des Randes vorsteht, wobei im zusammengebauten Zustand des Schachtes der zweite Schachtring mit seinem oberen Rand an dem Kopfteil des Lastaufnahmeelements anliegt und einen Abstand zu dem unteren Rand des ersten Schachtrings aufweist, in welchem das Lastaufnahmeelement befestigt ist. Bei einem derartigen Schacht aus Beton konnte beobachtet werden, dass sich beim Versetzen der Schachtringe auf der Baustelle immer wieder einzelne Lastaufnahmeelemente aus dem Betonkörper des Schachtrings lösen und verloren gehen bevor der fragliche Schachtring verbaut wird.

Weiterhin ist aus der WO 2005/000549 A1 ein vergleichbarer Schacht aus Beton bekannt, wobei hier das Lastaufnahmeelement zur Einbindung in einen der Schachtringe zwei parallel zu einander und in Richtung einer Längserstreckung des streifenförmigen Lastaufnahmeelements verlaufende Stege aufweist, welche in den Betonkörper des Schachtrings eingebunden sind. Eine derartige Gestaltung macht eine manuelle Vormontage des Lastaufnahmeelements mit Hilfe eines Hammers in der Untermuffe schwierig, da in der Regel nur einer der Stege von dem Hammer getroffen wird und der Hammer abrutscht bzw. das Lastaufnahmeelement schräg in die Ausnehmung der Untermuffe geschlagen wird und sich an deren Rand verkantet bzw. beschädigt wird.

Der Erfindung liegt die Aufgabe zugrunde, einen Schacht aus Beton bzw. ein Lastaufnahmeelement zu entwickeln, welcher auch unter rauen Baustellenbedingungen nicht einzelne seiner Komponenten verliert und eine einfache und sichere manuelle Montage dieser Komponenten gewährleistet bzw. welches auch unter rauen Baustellenbedingungen sicher mit einem Schachtring in Verbindung bleibt und sicher und einfach manuell vormontierbar ist.

Diese Aufgabe wird ausgehend von den Merkmalen des Oberbegriffs des Anspruchs 1 bzw. des Anspruchs 2 durch die kennzeichnenden Merkmale des Anspruchs 1 bzw. des Anspruchs 2 gelöst. In den Unteransprüchen sind vorteilhafte und zweckmäßige Weiterbildungen angegeben.

Der erfindungsgemäße Schacht aus Beton umfasst wenigstens einen Schachtring mit wenigstens einem Lastaufnahmeelement, bei welchem sich der Steg auf der Fußfläche des Lastaufnahmeelements schräg oder quer über die Fußfläche zu einer in Längserstreckung des Lastaufnahmeelements verlaufenden Längsachse des Lastaufnahmeelements erstreckt und bei welchem die Fußfläche des Lastaufnahmeelements seitlich des Stegs wenigstens eine Schlagfläche bildet, wobei das Lastaufnahmeelement an der wenigstens einen Schlagfläche in eine Ausnehmung in eine Untermuffe einer Form zur Herstellung des Schachtrings mit einem Werkzeug einschlagbar ist. Bei einem erfindungsgemäßen Schacht mit einem Schachtring, welcher ein derartiges Lastaufnahmeelement umfasst, gehen auch unter rauen Baustellenbedingungen keine einzelnen Komponenten des Schachtrings verloren, wobei die manuelle Montage des Lastaufnahmeelements trotzdem einfach ist. Kern der Erfindung ist somit ein Schacht, bei welchem das bzw. die Lastaufnahmeelemente sicher durch den Beton in den einzelnen Schachtringen gehalten sind und trotzdem bei der Herstellung des einzelnen Schachtrings des Schachts in herkömmlicher Weise im Betonwerk durch Hammerschläge in einer Untermuffe der Form vormontierbar sind.

Das erfindungsgemäße Lastaufnahmeelement zur Einbetonierung in einen Schachtring weist wenigstens einen Steg auf, der sich aus der Fußfläche des Lastaufnahmeelements heraus schräg oder quer zu einer in Längserstreckung des Lastaufnahmeelements verlaufenden Längsachse des Lastaufnahmeelements erstreckt, wobei die Fußfläche des Lastaufnahmeelements seitlich des Stegs wenigstens eine Schlagfläche bildet und wobei das Lastaufnahmeelement an der wenigstens einen Schlagfläche in eine Ausnehmung in einer Untermuffe einer Form zur Herstellung des Schachtrings mit einem werkzeug einschlagbar ist. Ein derartiges Lastaufnahmeelement ist durch seinen wenigsten einen Steg dazu geeignet auch unter rauen Baustellenbedingungen sicher mit einem Schachtring in Verbindung zu bleiben und eignet sich trotz des wenigstens einen Stegs für eine sichere und einfache manuelle Vormontage an einer Untermuffe bei der Herstellung eines Schachtrings für einen Schacht.

Die Erfindung sieht vor, den Steg über eine gesamte Breite des Lastaufnahmeelements auszubilden. Hierdurch wird trotz des schräg bzw. quer zu der Längsrichtung des Lastaufnahmeelements verlaufenden Stegs ein für das Eingießen in Beton ausreichend stabiler Steg erreicht.

Erfindungsgemäß ist eine formschlüssige Einbettung des Lastaufnahmeelements mit seinem Steg in den Schachtring vorgesehen. Hierdurch ist das Lastaufnahmeelement besonders sicher in dem Betonkörper des Schachtrings gehalten.

Insbesondere sieht die Erfindung wenigstens eine vorübergehende Verbreiterung des Stegs in Richtung seiner etwa parallel zu der Fußfläche liegenden Oberkante vor. Hierdurch erhält der Steg eine in der Seitenansicht bzw. im Querschnitt widerhakenförmige bzw. pilzförmige Form, welche einen besonders wirksamen formschlüssigen Halt des Lastaufnahmeelements in dem Betonkörper des Schachtrings ermöglicht.

Gemäß einer Ausführungsvariante der Erfindung ist es vorgesehen, an dem Steg wenigstens eine Bohrung und/oder wenigstens einen Durchbruch anzuordnen. Auch hierdurch ist ein Formschluss zwischen dem Beton des Betonkörpers des Schachtrings und dem Lastaufnahmeelement herstellbar, da der Beton bei der Herstellung auch in die Bohrungen bzw. Durchbrüche des Stegs des Lastaufnahmeelements gedrückt wird.

Eine weitere Ausführungsvariante sieht vor, den Steg mit einer Oberfläche zu versehen, die mit Noppen und/oder Stiften besetzt ist. Auch an den Noppen und/oder Stiften entsteht bei der Herstellung des Schachtrings der gewünschte Formschluss.

Weiterhin sieht die Erfindung vor, den Steg mit einer von der Fußfläche des Lastausgleichselements gemessenen Höhe von wenigstens 1,5 cm auszubilden. Hierdurch wird eine Einbettung in den Betonkörper des Schachtrings erreicht, durch welche das Lastaufnahmeelement auch trotz größerer von außen wirkender Kräfte sicher an dem Betonkörper des Schachtrings gehalten wird. Derartige Kräfte können beispielsweise auftreten, wenn bei zwei aufeinander liegenden Schachtringen ein Schachtring gegenüber einem anderen Schachtring verdreht wird, ohne das die Schachtringe hierzu ausreichend voneinander getrennt werden.

Die Erfindung sieht auch vor, an dem Kopfteil des Lastaufnahmeelements wenigstens zwei Dome anzuordnen, welche mit ihren Längsachsen in Richtung des Kraftflusses zwischen zwei aufeinander liegenden Schachtringen ausgerichtet sind und zu dem gegenüberliegenden Schachtring hin senkrecht zur Richtung des Kraftflusses kongruente Querschnittflächen aufweisen. Hierdurch ist eine optimale Abstützung bei gleichzeitig einfacher Formgebung des Lastaufnahmeelements möglich.

Schließlich sieht die Erfindung vor, den Steg zu der Längsachse des Lastaufnahmeelements in einem Winkel α von 30°<= α <= 90° anzuordnen. Eine derartige Schrägstellung bzw. Querstellung des Stegs auf der Fußfläche bzw. dem Grundkörper in Bezug auf die Längsachse des Lastaufnahmeelements, gewährleistet ausreichend dimensionierte Schlagflächen. weitere Einzelheiten der Erfindung werden in der Zeichnung anhand von schematisch dargestellten Ausführungsbeispielen beschrieben. Zur Erhaltung der Übersichtlichkeit wurde auf die Schraffur geschnittener Flächen verzichtet.

Hierbei zeigt:
- Figur 1a - 1c:: ein erstes erfindungsgemäßes Lastaufnahmeelement in drei unterschiedlichen Ansichten;

- Figur 2a - 2c:: ein zweites erfindungsgemäßes Lastaufnahmeelement in drei unterschiedlichen Ansichten;
- Figur 3a - 3d:: eine schematische Darstellung der Herstellung eines Schachtrings;
- Figur 4:: eine schematische Darstellung eines Ausschnitts eines erfindungsgemäßen Schachts;
- Figur 5 - 11b:: eine dritte bis neunte Ausführungsvariante von Lastaufnahmeelementen in Seitenansicht und
- Figur 12:: eine perspektivischer Ansicht eines Ausschnitts eines weiteren erfindungsgemäßen Schachts.

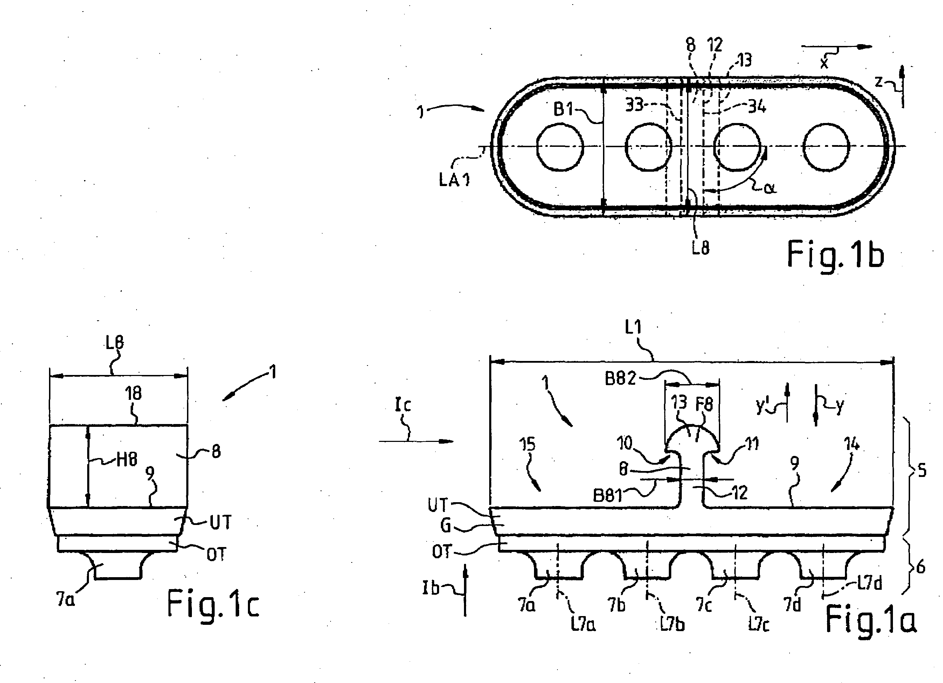

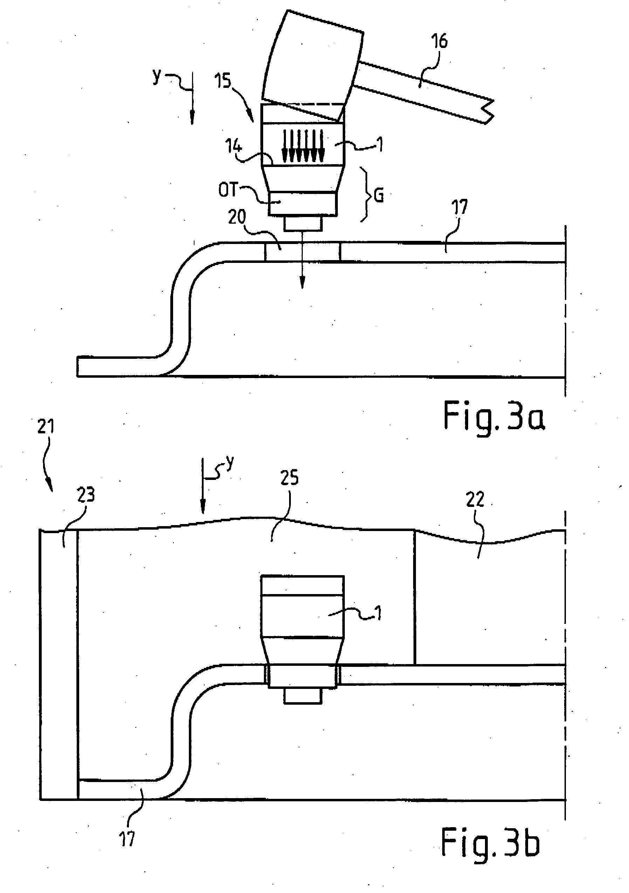

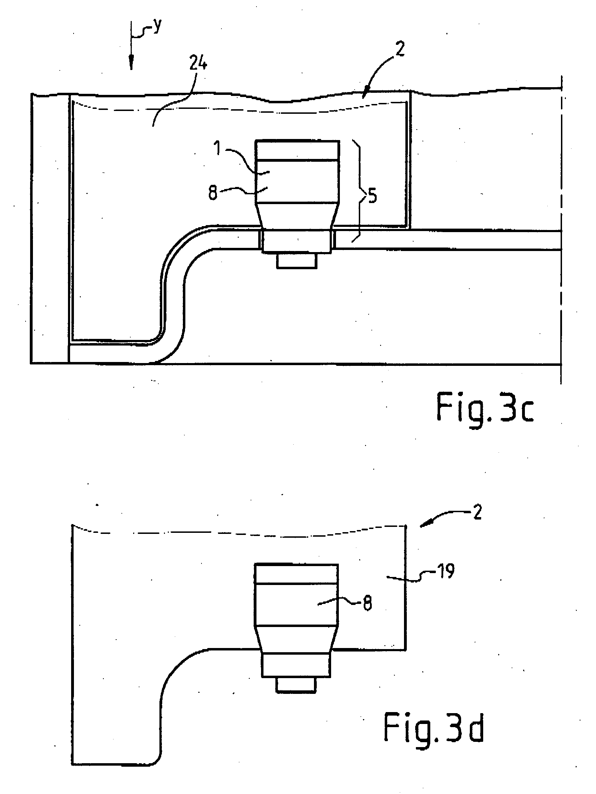

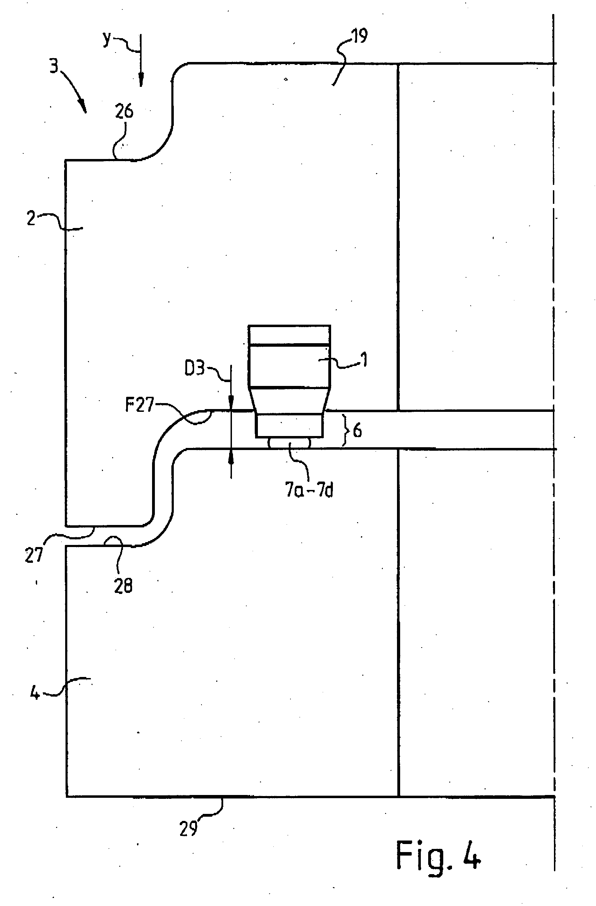

In den Figuren 1a bis 1c ist ein erstes erfindungsgemäßes Lastaufnahmeelement 1 in drei unterschiedlichen Ansichten dargestellt. Dieses Lastaufnahmeelement 1 ist zum Einbau in einen ersten Schachtring 2 eines Schachts 3 vorgesehen, wobei der Schacht 3 den ersten Schachtring 2 und einen zweiten Schachtring 4 umfasst (siehe Figur 4). In der Figur 1a ist das Lastaufnahmeelement 1 in einer Seitenansicht dargestellt. Das Lastaufnahmeelement 1 umfasst ein Fußteil 5 und ein Kopfteil 6. Das Kopfteil 6 umfasst vier Dome 7a, 7b, 7c und 7d, welche parallele Längsachsen L7a, L7b, L7c und L7d aufweisen, und ein streifenförmiges Oberteil OT eines Grundkörpers G. Diese Längsachsen L7a bis L7d verlaufen in eine Pfeilrichtung y, in welcher das Lastaufnahmeelement 1 in dem zusammengesetzten Schacht 3 belastet wird. Das Fußteil 5 des Lastaufnahmeelements 1 umfasst einen Steg 8, welcher sich aus einer Fußfläche 9 eines streifenförmigen Unterteils UT des Grundkörpers G erhebt. In eine Pfeilrichtung y' verdickt sich der Steg 8 von einer Breite B81 auf eine Breite B82 und verjüngt sich anschließend wieder. Hierdurch entsteht in der Seitenansicht bzw. im Schnitt eine Fläche F8 mit pilzähnlicher Form. Durch diese Formgebung entstehen, aus der Pfeilrichtung y betrachtet, zwei Hinterschneidungen 10, 11. Der Steg 8 steht quer zu einer Längserstreckung L1, bzw. einer Längsachse LA1 des Lastaufnahmeelements 1 auf der Fußfläche 9 bzw. dem Unterteil UT des Grundkörpers G. Dies ist insbesondere in der in der Figur 1b gezeigten Unteransicht erkennbar, welche das in der Figur 1a gezeigte Lastaufnahmeelement 1 aus einer Pfeilrichtung Ib zeigt. Mit gestrichelten Linien sind hier Kanten eines Steghalses 12 und eines Stegkopfes 13 des Stegs 8 angedeutet. Der Steg 8 des Lastaufnahmeelements 1 steht mit seinen Seitenflächen 33, 34 in einem Winkel α = 90° zu seiner Längsachse LA1. Der Steg 8 erstreckt sich über eine Breite B1 des Lastaufnahmeelements 1 und weist hierbei eine Länge L8 auf. Durch den Steg 8 wird die Fußfläche 9 in eine erste Schlagfläche 14 und eine zweite Schlagfläche 15 unterteilt. Über diese Schlagflächen 14 und 15 kann das Lastaufnahmeelement 1 mit einem Werkzeug 16 (siehe Figur 3a) in die Pfeilrichtung y in eine Untermuffe 17 (siehe Figur 3a) eingeschlagen werden. Die Figur 1c zeigt schließlich eine Ansicht des in der Figur 1a gezeigten Lastaufnahmeelements 1 aus einer Pfeilrichtung Ic. In dieser Ansicht ist eine Oberkante 18 des Stegs 8 erkennbar, welche parallel zu der Fußfläche 9 verläuft. Der Steg 8 weist eine Höhe H8 auf, wobei für das vorliegende Ausführungsbeispiel etwa gilt L8 = 1,5 x H8.

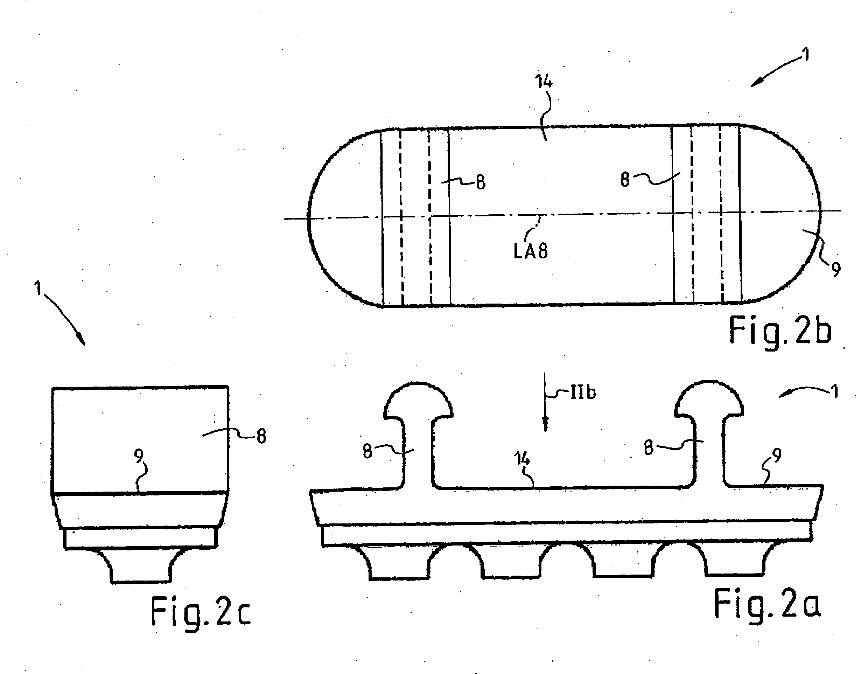

In den Figuren 2a bis 2c ist in Ansichten, die mit den Ansichten der Figuren 1a bis 1c vergleichbar sind, ein zweites Lastaufnahmeelement 1. dargestellt, wobei die Figur 2b eine Draufsicht aus einer Pfeilrichtung IIb auf das in der Figur 2a dargestellte Lastaufnahmeelement 1, zeigt. Dieses weist im Unterschied zu dem in den vorhergehenden Figuren 1a bis 1c gezeigten Lastaufnahmeelement zwei Stege 8 auf, welche quer zu einer Längsachse LA8 des Lastaufnahmeelements 8 stehen und parallel zueinander ausgerichtet sind. Eine Fußfläche 9 des Lastaufnahmeelements 1 bildet zwischen den beiden Stegen 8 eine Schlagfläche 14.

Die Figuren 3a bis 3d zeigen schematische Darstellung der Herstellungsschritte für den oben bereits erwähnten ersten Schachtring 2. Der Schachtring 2 besteht im wesentlichen aus einem Betonkörper 19 und mehreren Lastaufnahmeelementen 8 (siehe Figur 3d). Für die Herstellung des Schachtrings 2 werden zunächst die Lastaufnahmeelemente 1 in Ausnehmungen 20 der oben bereits erwähnten Untermuffe 17 mit dem oben erwähnten Werkzeug 16 in eine Pfeilrichtung bzw. eine Montagerichtung bzw. Einschlagrichtung y eingeschlagen. Hierbei sind die Ausnehmungen 20 so gestaltet, dass das Lastaufnahmeelement 8 mit einem Oberteil OT seines Grundkörpers G in die Ausnehmung 20 klemmend passt. Das Einschlagen des Lastaufnahmeelements 8 erfolgt an Schlagflächen 14 und 15, wobei das in den Figuren 3a bis 3d gezeigte Lastaufnahmeelement 8 vergleichbar zu dem in den Figuren 1 a bis 1c gezeigten Lastaufnahmeelement ausgebildet ist. Nach dem Einschlagen der Lastaufnahmeelemente 8 wird eine Form 21, zu welcher die Untermuffe 17 gehört, durch einen Kern 22 und einen Außenring 23 komplettiert (siehe Figur 3b). Anschließend wird von oben Beton 24 in einen Innenraum 25 der Form 21 gefüllt. Der in die Pfeilrichtung y in den Innenraum 25 der Form 21 strömende Beton 24 umfließt beim Befüllen und Verdichten Fußteile 5 der Lastaufnahmeelemente 1. Im erhärtenden Beton 24 sind die Lastaufnahmeelemente 1 dann über ihre Stege 8 8 formschlüssig im Beton 24 gehalten. In der Figur 3d ist ein Ausschnitt des Schachtrings 2 nach dem Entschalen dargestellt.

In der Figur 4 ist nun der oben bereits erwähnte Schacht 3 dargestellt, welcher sich aus dem ersten Schachtring 2 und dem zweiten Schachtring 4 zusammensetzt. Der erste Schachtring 2 weist einen oberen ringförmigen Rand 26 und einen unteren ringförmigen Rand 27 auf. Der zweite Schachtring 4 weist einen oberen ringförmigen Rand 28 und einen unteren ringförmigen Rand 29 auf. Der erste bzw. obere Schachtring 2 liegt mit seinem unteren Rand 27 dem oberen Rand 28 des zweiten, unteren Schachtrings 4 gegenüber. Eine Berührung der Ränder 27 und 28 der Schachtringe 2 und 4 wird durch die in gleichmäßigen Abständen über den ringförmigen Rand 27 des oberen Schachtrings 2 bzw. über dessen Stirnfläche F27 in Pfeilrichtung y hinausstehenden Lastaufnahmeelemente 1 verhindert. Der erste, obere Schachtring 2 liegt ausschließlich mit Domen 7a bis 7d von Kopfteilen 6 seiner Lastaufnahmeelemente 1 auf dem oberen Rand 28 des zweiten, unteren Schachtrings 4 auf. Hierbei werden insbesondere die Dome 7a bis 7d durch das Gewicht des Betonkörpers 19 des ersten Schachtrings 2 leicht gestaucht bzw. verformt. Hierbei werden der obere Schachtring 2 und der untere Schachtring 4 in einem Abstand D3 zueinander gehalten. Die Lastaufnahmeelemente 1 sind durch ihre innige Verbindung mit dem Betonkörper 19 des Schachtrings 2 beim Entschalen des Schachtrings 2, beim Transport des Schachtrings 2 und beim Versetzen des Schachtrings 2 zuverlässig gehalten.

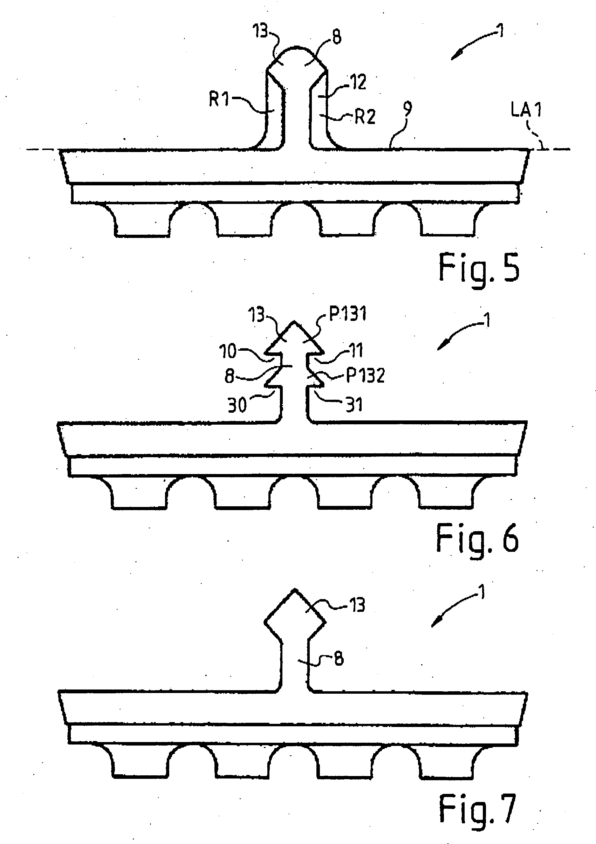

Die Figuren 5 bis 11b zeigen eine dritte bis neunte Ausführungsvariante von Lastaufnahmeelementen 1, wobei diese sich im wesentlichen durch die Konstruktion ihrer Stege 8 unterscheiden.

Der Steg 8 des in der Figur 5 gezeigten Lastaufnahmeelements 1 ist durch zwei dünne Rippen R1 und R2 verstärkt. Die Rippen R1 und R2 erstrecken sich senkrecht zu einer Längsachse LA1 des Lastaufnahmeelements 1 von einem Stegkopf 13 parallel zu einem Steghals 12 auf eine Fußfläche 9.

Der Steg 8 des in der Figur 6 gezeigten Lastaufnahmeelements 1 ist durch einen Stegkopf 13 gekennzeichnet, der sich in der dargestellten Seitenansicht aus zwei Pfeilspitzen P131 und P132 zusammensetzt. Hierdurch weist der Steg 8 zusätzlich zu Hinterscheidungen 10 und 11 zwei weitere Hinterschneidungen 30 und 31 auf.

Der Steg 8 des in der Figur 7 gezeigten Lastaufnahmeelements 1 ist durch einen massiven Stegkopf 13 gekennzeichnet, welcher geeignet ist, ein besonders wirksames Widerlager in einem Betonkörper zu bilden, in welchen dieser eingegossen wird.

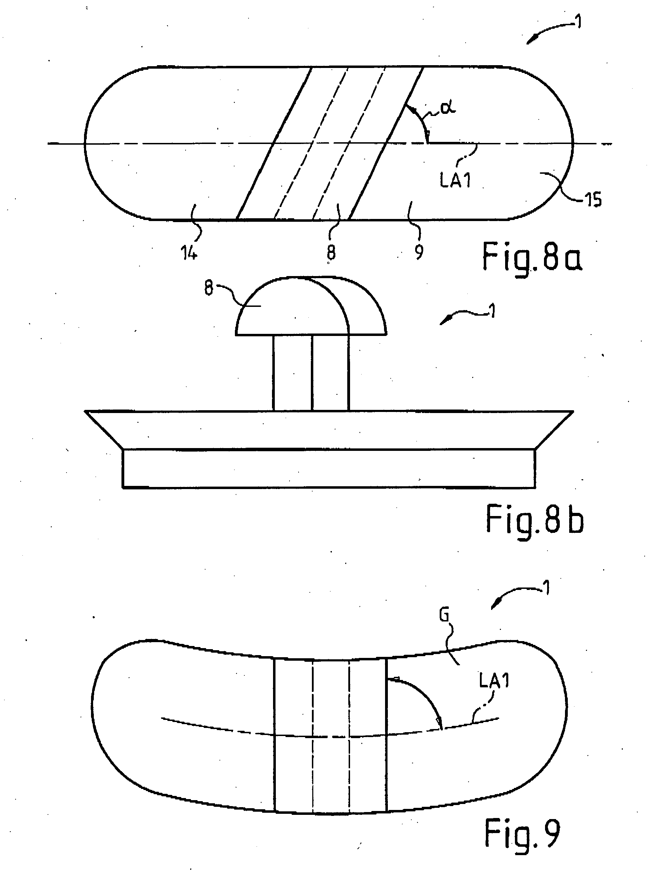

Das in den Figuren 8a und 8b dargestellte Lastausgleichselement 1 ist unter Weglassung von Domen dargestellt und weist einen Steg 8 auf, welcher hinsichtlich seiner Formgebung ähnlich zu dem in den Figuren 1a bis 1c gezeigten Steg ausgebildet ist. Im Unterschied zu diesem steht der Steg 8 des in den Figuren 8a und 8b gezeigten Lastausgleichselements 1 jedoch in einem Winkel α von 63° zu einer Längsachse LA1 des Lastausgleichselements 1 und teilt eine Fußfläche 9 in zwei Schlagflächen 14 und 15.

Bei dem in der Figur 9 dargestellten Lastausgleichselement 1 verläuft eine Längsachse LA1 bogenförmig auf einem gebogenen Grundkörper G und ist auf einen Radius einer Untermuffe bzw. eines Schachtrings angepasst.

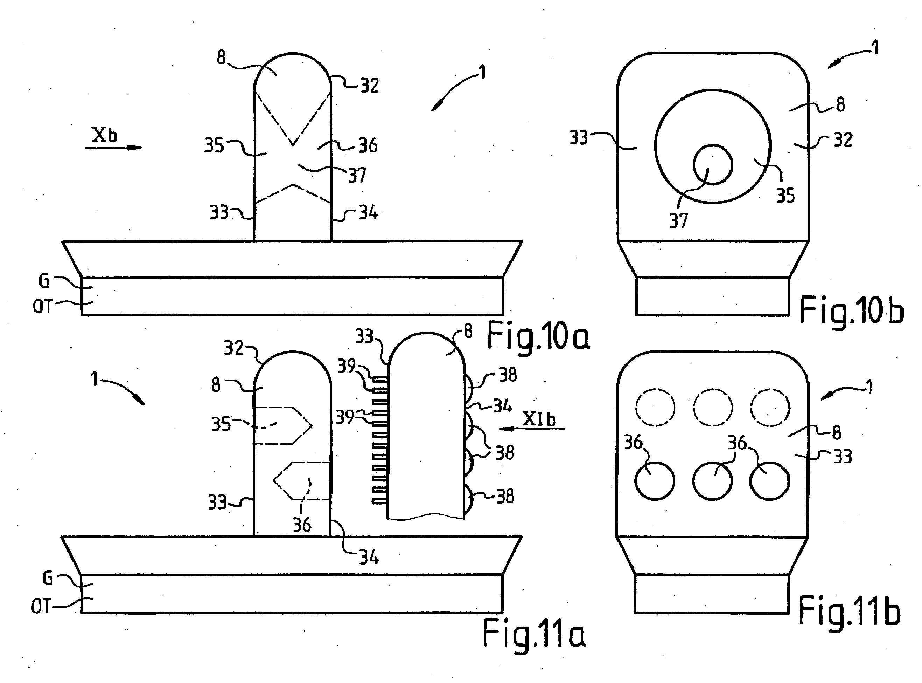

Das in den Figuren 10a und 10b dargestellte Lastausgleichselement 1 ist unter Weglassung von an einem Oberteil OT eines Grundkörpers G angeordneten Domen dargestellt und weist einen Steg 8 auf, dessen Oberfläche 32 an zwei gegenüberliegenden Seitenflächen 33 und 34 jeweils eine Bohrung 35, 36 aufweist, wobei die beiden Bohrungen 35, 36 einen Durchbruch 37 bilden. Bei der Herstellung eines Schachtrings strömt flüssiger Beton in die Bohrungen 35, 36 und bettet das Lastaufnahmeelement 1 formschlüssig in den erhärtenden Betonkörper des Schachtrings ein. In der Figur 10b ist das in der Figur 10a gezeigte Lastausgleichselement 1 aus einer in der Figur 10a gezeigten Pfeilrichtung Xb dargestellt.

Das in den Figuren 11a und 11b dargestellte Lastausgleichselement 1 ist unter Weglassung von an einem Oberteil OT eines Grundkörpers G angeordneten Domen dargestellt und weist einen Steg 8 auf, dessen Oberfläche 32 an zwei gegenüberliegenden Seitenflächen 33 und 34 jeweils drei versetzt zueinander angeordnete Bohrungen 35, 36 aufweist. In der Figur 11b ist das in der Figur 11a gezeigte Lastausgleichselement 1 aus einer in der Figur 11a gezeigten Pfeilrichtung xIb dargestellt. Als Ausführungsvariante ist in der Figur 11a noch eine zweite Darstellung eines Stegs 8 gezeigt, bei welchem gegenüberliegende Seitenflächen 33, 34 mit Noppen 38 und mit Stiften 39 besetzt sind, um einem optimalen Halt des Lastaufilahmeelements 1 in einem Betonring zu erzielen.

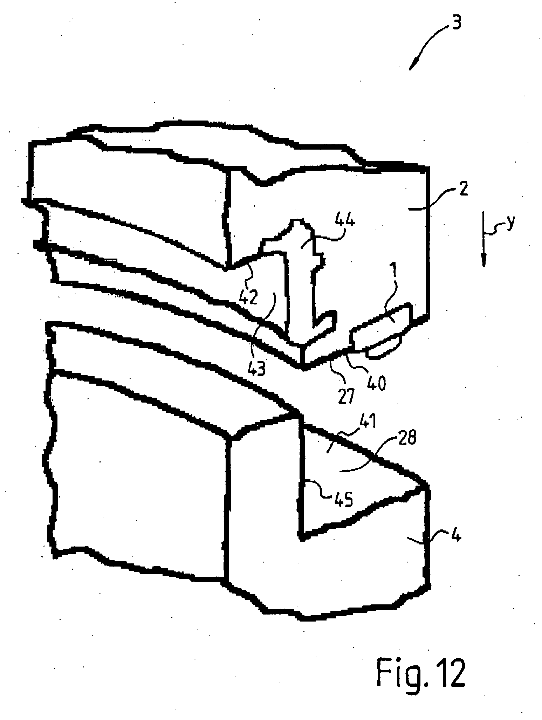

In der Figur 12 ist eine perspektivischer Ansicht eines Ausschnitts eines weiteren erfindungsgemäßen Schachts 3 dargestellt. Der Schacht 3 umfasst einen ersten Schachtring 2 und einen zweiten Schachtring 4. Der erste Schachtring 2 weist einen unteren ringförmigen Rand 27 auf. Der zweite Schachtring 4 weist einen oberen ringförmigen Rand 28 auf. Der Schachtring 2 wird in eine Pfeilrichtung y auf den Schachtring 4 abgesenkt. Hierbei legt sich der obere Schachtring 2 mit Lastaufnahmeelementen 1, welche in gleichmäßigen Abständen über den ringförmigen Rand 27 bzw. eine äußere Schulter 40 des oberen Schachtrings 2 verteilt sind, auf eine äußere Schulter 41 des unteren Schachtrings 4 auf. Im Unterschied zu dem in der Figur 4 gezeigten Schacht sind die Lastaufnahmeelemente 1 nicht, an einer inneren Schulter 42 des oberen Schachtrings 2, sondern an dessen äußerer Schulter 40 angeordnet. Weiterhin weist der ringförmige Rand 27 des oberen Schachtrings 2 einen umlaufenden Absatz 43 auf, welcher durch eine in den oberen Schachtring 2 eingegossene Dichtung 44 gebildet ist. Diese dichtet den Schacht 3 im zusammengesetzten Zustand gegenüber einem Absatz 45 ab, welcher an dem oberen ringförmigen Rand 28 des unteren Schachtrings 4 ausgebildet ist.

Die Erfindung ist nicht auf dargestellte oder beschriebene Ausführungsbeispiele beschränkt. Sie umfasst vielmehr weiterbildungen der Erfindung im Rahmen der Schutzrechtsansprüche.

### Bezugszeichenliste:

- 1: Lastaufnahmeelement
- 2: Erster Schachtring von 3
- 3: Schacht
- 4: Zweiter Schachtring von 3
- 5: Fußteil von 1
- 6: Kopfteil von 1
- 7a- 7d: Dom an 6 von 1
- 8: Steg von 5
- 9: Fußfläche von 1
- 10: Hinterschneidung an 8
- 11: Hinterschneidung an 8
- 12: Steghals von 8
- 13: Stegkopf von 8
- 14. 15: erste bzw. zweite Schlagfläche an 1
- 16: Werkzeug
- 17: Untermuffe von 21
- 18: Oberkante von 8
- 19: Betonkörper von 2
- 20: Ausnehmung in 17
- 21: Form
- 22: Kern von 21
- 23: Außenring von 21
- 24: Beton
- 25: Innenraum von 21
- 26: Oberer Rand von 2
- 27: Unterer Rand von 2
- 28: Oberer Rand von 4
- 29: Unterer Rand von 4
- 30: Hinterschneidung an 8
- 31: Hinterschneidung an 8
- 32: Oberfläche von 8
- 33, 34: gegenüberliegende Seitenfläche
- 35, 36: Bohrung in 8
- 37: Durchbruch in 8

- 38: Noppe an 8
- 39: Stift an 8
- 40: äußere Schulter von 2
- 41: äußere Schulter von 4
- 42: innere Schulter von 2
- 43: Absatz von 27
- 44: Dichtung
- 45: Absatz von 28

- B1: Breite von 1
- B81: Breite von 8
- B82: Breite von 8
- D3: Abstand zwischen 2 und 4
- F27: Stirnfläche von 2 bei 8.
- G: Grundkörper von 8
- F8: Fläche von 8
- H8: Höhe von 8
- L1: Längserstreckung von 1
- LA1: Längsachse von 1
- L7a- L7d: Längsachse
- L8: Länge von 8
- OT: Oberteil von G
- P131: Pfeilspitze
- P132: Pfeilspitze
- R1, R2: Rippe an 8
- UT: Unterteil von G
- x: Pfeilrichtung
- y: Pfeilrichtung, Montagerichtung, Einschlagrichtung
- z: Pfeilrichtung
- α: Winkel zwischen LA1 und 8

## Patentansprüche

1. Schacht (3) aus Beton (24) oder dgl., wobei der Schacht (3) wenigstens einen ersten Schachtring (2) und einen zweiten Schachtring (4) umfasst, wobei die Schachtringe (2, 4) jeweils einen oberen und einen unteren Rand (26 - 29) aufweisen, wobei wenigstens der erste Schachtring (2) an seinem mit dem zweiten Schachtring (4) zusammenwirkenden unteren Rand (27) mehrere an dem Rand (27) in Abstand voneinander am Umfang verteilt angeordnete, streifenförmige Lastaufnahmeelemente (1) aus Kunststoff aufweist, wobei das einzelne Lastaufnahmeelement (1) mit einem Fußteil (5) in den Rand (27) eingebettet ist und mit einem Kopfteil (6) über eine Stirnfläche (F27) des Randes (27) vorsteht, wobei das Fußteil (5) an einer Fußfläche (9) wenigstens einen Steg (8) aufweist, wobei im zusammengebauten Zustand des Schachtes (3) der zweite Schachtring (4) mit seinem oberen Rand (28) an dem Kopfteil (6) des Lastaufnahmeelements (1) anliegt und einen Abstand (D3) zu dem unteren Rand (27) des ersten Schachtrings (2) aufweist, in welchem das Lastaufnahmeelement (8) befestigt ist, **dadurch gekennzeichnet, dass** sich der Steg (8) auf der Fußfläche (9) des Lastaufnahmeelements (1) schräg oder quer über die Fußfläche (9) zu einer in Längserstreckung (L1) des Lastaufnahcncelements (1) verlaufenden Längsachse (LR1) des Lastaufnahmeelements (1) erstreckt, wobei die Fußfläche (9) des Lastaufnahmeelements (1) seitlich des Stegs (8) wenigstens eine Schlagfläche (14, 15) bildet und wobei das Lastaufnahmeelement (1) an der wenigstens einen Schlagfläche (14, 15) in eine Ausnehmung (20) in eine Untermuffe (17) einer Form (21) zur Herstellung des ersten Schachtrings (2) mit einem Werkzeug (16) einschlagbar ist.

2. Lastaufnahmeelement (1) zur Einbetonierung in einen Schachtring (2, 4), insbesondere aus Beton (24), wobei das Lastaufnahmeelement (1) streifenförmig ausgebildet ist und ein Kopfteil (6) und ein Fußsteil aufweist (5), wobei das Fußteil (5) an einer Fußfläche (9) des Lastaufnahmeelements (1) wenigsten einen Steg (8) aufweist, **dadurch gekennzeichnet, dass** sich der Steg (8) auf der Fußfläche (9) des Lastaufnahmeelements (1) schräg oder quer über die Fußfläche (9) zu einer in Längserstreckung (L1) des Lastaufnahmeelements (1) verlaufenden Längsachse (LA1) des Lastaufnahmeelements (1) erstreckt, wobei die Fußfläche (9) des Lastaufnahmeelements (1) seitlich des Stegs (8) wenigstens eine Schlagfläche (14, 15) bildet, und wobei das Lastaufnahmeelement (1) an der wenigstens einen Schlagfläche (14, 15) in eine Ausnehmung (20) in einer Untermuffe (17) einer Form (21) zur Herstellung des Schachtrings (2) mit einem Werkzeug (16) einschlagbar ist.

3. Schachtbauteil bzw. Lastaufnahmeelement nach einem der vorhergehenden Ansprüche, **dadurch gekennzeichnet, dass** sich der Steg (8) über eine gesamte Breite (B1) des Lastaufnahmeelements (1) erstreckt.

4. Schachtbauteil bzw. Lastaufnahmeelement nach einem der vorhergehenden Ansprüche, **dadurch gekennzeichnet, dass** das Lastaufnahmeelement (1) mit seinem Steg (8) formschlüssig in den ersten Schachtring (2) eingebettet ist.

5. Schachtbauteil bzw. Lastaufnahmeelement nach einem der vorhergehenden Ansprüche, **dadurch gekennzeichnet, dass** sich der Steg (8) in Richtung seiner etwa parallel zu der Fußfläche (9) liegenden Oberkante (18) bzw. entgegen der Montagerichtung (y) des Lastaufnahmeelements (1) an der Untermuffe (17) wenigstens einmal verbreitert und wieder verjüngt.

6. Schachtbauteil bzw. Lastaufnahmeelement nach einem der vorhergehenden Ansprüche, **dadurch gekennzeichnet, dass** der Steg (8) wenigstens eine Bohrung (35, 36) und/oder wenigstens einen Durchbruch (37) aufweist.

7. Schachtbauteil bzw. Lastaufnahmeelement nach einem der vorhergehenden Ansprüche, **dadurch gekennzeichnet, dass** der Steg (8) eine Oberfläche (32) aufweist, die mit Noppen (38) und/oder Stiften (39) besetzt ist.

8. Schachtbauteil bzw. Lastaufnahmeelement nach einem der vorhergehenden Ansprüche, **dadurch gekennzeichnet, dass** der Steg (8) eine Höhe (H8) von wenigstens 1,5 cm aufweist.

9. Schachtbauteil bzw. Lastaufnahmeelement nach Anspruch 1 bzw. 2, **dadurch gekennzeichnet, dass** das Kopfteil (6) des Lastaufnahmeelements (1) wenigstens zwei Dome (7a - 7d) aufweist, welche mit ihren Längsachsen (L7a - L7d) in Richtung des Kraftflusses ausgerichtet sind und zu dem zweiten Schachtring (4) hin senkrecht zur Richtung des Kraftflusses kongruente Querschnittflächen aufweisen.

10. Schachtbauteil bzw. Lastaufnahmeelement nach einem der vorhergehenden Ansprüche, **dadurch gekennzeichnet, dass** der Steg (8) zu der Längsachse (LA1) des Lastaufnahmeelements (1) in einem Winkel (α) von 30°<= α <= 90° steht.
